# EUROPÄISCHE PATENTANMELDUNG

(11) **EP 3 361 598 A2**
(43) Veröffentlichungstag der Anmeldung: **15.08.2018**
(21) Anmeldenummer: 18152331.7
(22) Anmeldetag: 18.01.2018
(51) Int. Cl.: H02J 7/00, H02M 7/483

(54) **SYMMETRIERUNGSVORRICHTUNG FUER EINE BATTERIE IN EINER UMRICHTERANORDNUNG**

(30) Priorität: 13.02.2017 DE 102017202204
(71) Anmelder: Siemens Aktiengesellschaft, 80333 München (DE)
(72) Erfinder: Dallmer-Zerbe, Kilian, 91054 Erlangen (DE); Spahic, Ervin, 91052 Erlangen (DE)

(57) **Zusammenfassung**

Die Erfindung betrifft eine Umrichteranordnung (1) mit einem Umrichter (3), der wechselspannungsseitig mit einem Wechselspannungsnetz (2) und gleichspannungsseitig mit einer Speicheranordnung (8) verbindbar ist. Die Erfindung ist dadurch gekennzeichnet, dass der Umrichter eine Mehrzahl von Umrichterarmen aufweist, die jeweils eine Reihenschaltung von Halbleiterschaltmodulen (7) aufweisen, und die Speicheranordnung in Parallelschaltung zu wenigstens einem der Umrichterarme angeordnet ist, wobei die Speicheranordnung eine Vielzahl von Reihenschaltungen von einzelnen Energiespeichermodulen (23a1-nm) umfasst, wobei jede Reihenschaltung sich zwischen einer ersten und einer zweiten Gleichspannungssammelschiene erstreckt, so dass die Reihenschaltungen zueinander parallel geschaltet sind, wobei die Umrichteranordnung ferner eine Balancierungsvorrichtung (27) zum Balancieren von Energiespeichermodulspannungen der Energiespeichermodule umfasst, wobei die Balancierungsvorrichtung Balancierungsleitungen (27a, b) umfasst, die einzelne Energiespeichermodule unterschiedlicher Reihenschaltungen miteinander verbinden.

## Beschreibung

Die Erfindung betrifft eine Umrichteranordnung mit einem Umrichter, der wechselspannungsseitig mit einem Wechselspannungsnetz verbindbar ist, und einer Speicheranordnung, mit der der Umrichter gleichspannungsseitig verbindbar ist.

Eine solche Umrichteranordnung ist aus der WO 2007/102758 A1 bekannt. Dort ist eine Leistungskompensationsanlage beschrieben, die sowohl Blindleistung als auch Wirkleistung mit dem Wechselspannungsnetz austauschen kann. Die bekannte Leistungskompensationsanlage umfasst einen Umrichter, der auch als STATCOM (Static Var Compensator) bezeichnet wird, der wechselspannungsseitig über einen Transformator mit dem Wechselspannungsnetz verbunden ist. In einer Parallelschaltung zu der Gleichspannungsseite des Umrichters ist eine Kapazität angeordnet. Die Leistungskompensationsanlage umfasst ferner eine Speicheranordnung in Form von Batterien, die in einer Reihenschaltung parallel zur Kapazität angeordnet sind.

Durch einen Austausch der Wirkleistung zwischen dem Energiespeichermodul und dem Wechselspannungsnetz kann die Frequenz im Wechselspannungsnetz beeinflusst werden. Ist das Wechselspannungsnetz beispielsweise ein Energieversorgungsnetz, so ist die Grundfrequenz einer Wechselspannung im Wechselspannungsnetz meist 50 Hz oder 60 Hz. Diese Frequenz soll nach Möglichkeit in der Zeit konstant bleiben. Sie kann jedoch auch zeitlichen Fluktuationen unterliegen, beispielsweise aufgrund einer geänderten Leistungsaufnahme durch angeschlossene Verbraucher und/oder Leistungsabgabe durch angeschlossene Erzeuger. Die Frequenz kann dadurch stabilisiert werden, dass bei Frequenzerhöhung im Wechselspannungsnetz (Überfrequenz) die Kompensationsanlage zu einer Wirkleistungsaufnahme und bei einer Frequenzsenkung (Unterfrequenz) zu einer Wirkleistungsabgabe veranlasst wird.

Aus der US 2013/0122341 A1 ist eine Speicheranordnung bekannt, bei der einzelne Energiespeichermodule in einer Reihenschaltung verbunden sind, und mehrere solcher Reihenschaltungen parallel geschaltet sind. Durch die Verbindung mehrerer Energiespeichermodule in einer Reihenschaltung kann die erreichbare Spannung der Speicheranordnung erhöht werden. Durch die Verbindung der Reihenschaltungen parallel zueinander kann die Leistungsaufnahmefähgikeit beziehungsweise Leistungsabgabefähigkeit der Speicheranordnung erhöht werden.

Im Betrieb der Speicheranordnung ist es wichtig, dass die einzelnen Energiespeichermodule stets gleiche elektrische Eigenschaften aufweisen. Beispielsweise führen Abweichungen der Kapazität der Energiespeichermodule untereinander zu unterschiedlichen Energiespeichermodulspannungen an den Energiespeichermodulen, was auch als Unsymmetrie bezeichnet wird. Die Unsymmetrie begrenzt die Nutzbarkeit der Speicheranordnung.

Im Niederspannungsbereich sind aktive Balacierungseinrichtungen bekannt, die zur Beseitigung der Unsymmetrie durch aktive Balancierung der Energiespeichermodulspannungen eingesetzt werden. Der Einsatzbereich der bekannten Balancierungseinrichtungen ist jedoch auf den Niederspannungsbereich eingeschränkt. Damit können diese nicht in der artgemäßen Umrichteranordnung eingesetzt werden, weil die Energiespeichermodule auf Spannungen oberhalb von 1 kV ausgelegt sind. Zudem sind aktive, also mit einer Regelung verbundene Balancierungseinrichtungen relativ kostenintensiv.

Die Aufgabe der Erfindung besteht darin, eine artgemäße Umrichteranordnung vorzuschlagen, die möglichst kostengünstig ist und eine hohe Nutzbarkeit der Speicheranordnung ermöglicht.

Die Aufgabe wird bei einer artgemäßen Umrichteranordnung erfindungsgemäß dadurch gelöst, dass der Umrichter eine Mehrzahl von Umrichterarmen aufweist, die jeweils eine Reihenschaltung von Halbleiterschaltmodulen aufweisen, und die Speicheranordnung in Parallelschaltung zu wenigstens einem der Umrichterarme angeordnet ist, wobei die Speicheranordnung eine Vielzahl von Speicherzweigen aufweist, die jeweils eine Reihenschaltung einzelner Energiespeichermodule umfassen, wobei jeder Speicherzweig sich zwischen einer ersten und einer zweiten Gleichspannungssammelschiene erstreckt, so dass die Speicherzweige zueinander parallel geschaltet sind, wobei die Umrichteranordnung ferner eine Balancierungsvorrichtung zum Balancieren von Energiespeichermodulspannungen der Energiespeichermodule umfasst, wobei die Balancierungsvorrichtung Balancierungsleitungen umfasst, die einzelne Energiespeichermodule unterschiedlicher Speicherzweige miteinander verbinden. Die erste Gleichspannungssammelschiene kann beispielsweise eine positive Gleichspannungssammelschiene, die zweite Gleichspannungssammelschiene eine negative Gleichspannungssammelschiene sein. Weist der Umrichter eine weiter unten beschriebene Doppelsternanordnung auf, so können die beiden Gleichspannungssammelschienen jeweils mit einem der Sternpunkte der Doppelsternanordnung verbunden sein.

Mittels der Balancierungsvorrichtung kann also ein Ladungsausgleich zwischen den Energiespeichermodulen unterschiedlicher Speicherzweige bzw. Reihenschaltungen erreicht werden. Auf diese Weise kann vorteilhaft eine Beseitigung oder zumindest Reduzierung der Unsymmetrie erreicht werden. Die Ausgleichsströme, die zur Balancierung der Energiespeichermodule führen, fließen dabei über die Balancierungsleitungen. Die Balancierungsvorrichtung der erfindungsgemäßen Umrichteranordnung ist zudem relativ kostengünstig und einfach im Aufbau.

Geeigneterweise ist die Balancierungsvorrichtung rein passiv. Dies bedeutet, dass die Balancierungsvorrichtung keine Regelung oder Datenübertragung zwischen den Energiespeichermodulen umfasst. Der Ausgleich zwischen den Energiespeichermodulen kann beispielsweise automatisch über die Balancierungsspannungen erfolgen, ohne weitere Maßnahmen. Damit ist die Balancierungsvorrichtung besonders einfach in Aufbau und Betrieb. Zudem arbeitet eine passive Balancierungsvorrichtung im Wesentlichen ohne einen Zeitverlust, der beispielsweise aufgrund einer Datenübertragung zwischen den Energiespeichermodulen entstehen könnte.

Im Gegensatz zu Betriebsstrompfaden der Umrichteranordnung tragen die Balancierungsleitungen im Betrieb der Umrichteranordnung keine hohen Ströme im Bereich von 1 kA und mehr. Daher kann es von Vorteil und ausreichend sein, wenn die Balancierungsleitungen auf Ausgleichsströme ausgelegt sind, die im Betrieb der Umrichteranordnung aufgrund von Kapazitätsdifferenzen zwischen den Energiespeichermodulen unterschiedlicher Speicherzweige fließen können. Diese Ausgleichströme sind wesentlich geringer als die Betriebsströme. Die Kapazitätsdifferenzen resultieren in relativ geringen Spannungsdifferenzen, die wiederum auch relativ geringe Ausgleichströme im Bereich von höchstens einigen Ampere bewirken. Somit können die Balancierungsleitungen entsprechend einfach und kostengünstig ausgebildet sein. Insbesondere können die Balancierungsleitungen als Kabel oder Stromschienen ausgeführt sein. Dabei kann deren Querschnitt deutlich kleiner gewählt sein.

Bevorzugt ist jedem der Energiespeichermodule eine Ordnungszahl bezogen auf die übrigen Energiespeichermodule der gleichen Reihenschaltung bzw. des gleichen Speicherzweiges zuweisbar, und die Balancierungsleitungen jeweils Energiespeichermodule gleicher Ordnungszahl miteinander verbinden. Beispielsweise kann das der positiven Gleichspannungssammelschiene nächstliegende Energiespeichermodul die niedrigste Ordnungszahl, erhalten. Das benachbarte Energiespeichermodulim gleichen Speicherzweig erhält dann die nächsthöhere Ordnungszahl und so weiter. Auf diese Weise kann jedem Energiespeichermodul eine natürliche Zahl als Ordnungszahl zugewiesen werden. Auf diese Weise können jeweils diejenigen Energiespeichermodule mittels der Balancierungsleitungen verbunden werden, die zumindest annähernd auf gleichem elektrischem Potenzial liegen.

Zweckmäßigerweise umfasst jeder Speicherzweig die gleiche Anzahl an Energiespeichermodulen. Dabei entspricht die Anzahl der Balancierungsleitungen der Anzahl der Energiespeichermodule in jedem Speicherzweig. Alternativ kann die Anzahl der Balancierungsleitungen auch eine niedrigere als die Zahl der Energiespeichermodule in einem Speicherzweig sein. Beispielsweise können mehrere Energiespeichermodule in einem Turm miteinander verbaut sein, wobei mehrere in einer Reihenschaltung verbundene Türme die Reihenschaltung des Speicherzweiges bilden, der sich zwischen der positiven und negativen Gleichspannungssammelschiene erstreckt. Jeder der Türme kann dabei einen positive und einen negativen Anschluss aufweisen. Die Balancierungsleitungen verbinden gemäß dieser Variante die positiven oder die negativen Anschlüsse der Türme. Allgemeiner kann jeder Speicherzweig eine Anzahl n*m der Energiespeichermodule aufweisen, wobei die n-ten Energiespeichermodule, die 2*n-ten Energiespeichermodule, die 3*n-ten Energiespeichermodule, usw. mittels der Balancierungsleitungen miteinander verbunden sind.

Vorzugsweise umfassen die einzelnen Energiespeichermodule sogenannte Supercaps, die auch als Superkondensatoren bezeichnet werden. Speicherelemente dieser Art weisen eine besonders hohe Leistungsdichte auf, so dass sie besonders schnell auf- und entladen werden können. Die Energiespeichermodule können alternativ oder in Kombination dazu auch Batteriespeicher umfassen.

Da im Wechselspannungsnetz üblicherweise Spannungen von über 100 kV eingesetzt werden, wird es als vorteilhaft angesehen, wenn die Energiespeichermodule an ihren Klemmen eine Spannung von mehr als 1 kV aufbauen können bwz. an ihrem Klemmen eine Spannung von mehr als 1 kV erzeugt werden kann. Durch die Reihenschaltung der Energiespeichermodule kann eine entsprechend hohe Gesamtspannung erreicht werden.

Gemäß einer Ausführungsform der Erfindung weisen die Energiespeichermodule jeweils eine positive und eine negative Anschlussklemme auf, wobei jede der Balancierungsleitungen die positiven oder die negativen Anschlussklemmen der Energiespeichermodule verbindet. Auf diese Weise können die Balancierungsleitungen auch nachträglich in die Speicheranordnung eingebaut werden, was eine Nachrüstung bestehender Speicheranordnungen ohne eine Balancierungsvorrichtung ermöglicht. Die entsprechenden Anschlussklemmen sind vorzugsweise mechanisch und elektrisch dazu eingerichtet, sowohl die jeweilige Stromleitung innerhalb des Speicherzweiges als auch die Balancierungsleitung zu tragen.

Zweckmäßigerweise umfassen die die Halbleiterschaltmodule Zwischenkondensatoren, die auch als Zwischenkreiskondensatoren bezeichnet werden können. Auf diese Weise ist die Umrichteranordnung zu einer Blindleistungskompensation im Wechselspannungsnetz ertüchtigt. Die Zwischenkondensatoren der Halbleiterschaltmodule sind nicht dazu vorgesehen, Wirkleistung zwischen der Umrichteranordnung und dem Wechselspannungsnetz auszutauschen.

Gemäß einer Ausführungsform der Erfindung umfassen die Halbleiterschaltmodule jeweils Halbleiterschalter sowie einen Zwischenkondensator, die miteinander in einer Vollbrückenmodulschaltung verbunden sind. Eine Vollbrückenmodulschaltung zeichnet sich dadurch aus, dass zwei Reihenschaltungen von zwei Halbleiterschaltern parallel geschaltet sind, wobei parallel zu den Reihenschaltungen der Halbleiterschalter der Zwischenkondensator angeordnet ist. Die Vollbrückenmodulschaltung weist zwei Anschlussklemmen auf, wovon eine mit einem Potenzialpunkt zwischen den Halbleiterschaltern der einen Reihenschaltung und die andere mit einem Potenzialpunkt zwischen den Halbleiterschaltern der anderen Reihenschaltung angeordnet ist. An den an Anschlussklemmen des Halbleiterschaltmoduls eine an dem Zwischenkondensator abfallende Kondensatorspannung, eine Nullspannung oder aber die inverse Kondensatorspannung erzeugbar ist.

Zweckmäßigerweise ist die Umrichteranordnung dazu eingerichtet, durch geeignete Ansteuerung der Halbleiterschaltmodule mittels einer Regelungseinrichtung eine Wirkleistung zwischen der Speicheranordnung und einem an die Umrichteranordnung wechselspannungsseitig angeschlossenen Wechselspannungsnetz auszutauschen. Damit ist die Umrichteranordnung dazu geeignet, beispielsweise zu einer Frequenzstabilisierung im Wechselspannungsnetz beizutragen.

Geeigneterweise ist die Umrichteranordnung ferner dazu eingerichtet, durch geeignete Ansteuerung der Halbleiterschaltmodule mittels einer Regelungseinrichtung eine Blindleistung zwischen den Halbleiterschaltmodulen und einem an die Umrichteranordnung wechselspannungsseitig angeschlossenen Wechselspannungsnetz auszutauschen. Die Umrichteranordnung kann damit dazu verwendet werden, das Wechselspannungsnetz durch eine Blindleistungskompensation weiter zu stabilisieren.

Mit der Reihenschaltung der Halbleiterschaltmodule ist der Umrichter ein sogenannter modularer Mehrstufenumrichter (MMC). Die Halbleiterschalter der Halbleiterschaltmodule des MMC sind voneinander unabhängig ansteuerbar, wodurch der MMC eine stufenförmige Wechselspannung mit einem nahezu beliebigen zeitlichen Verlauf generieren kann. Gemäß einer Ausführungsform der Erfindung sind die Umrichterarme des Umrichters in einer Doppelsternanordnung miteinander verbunden. Die Doppelsternanordnung ist durch den folgenden Aufbau gekennzeichnet. Der Umrichter umfasst drei Umrichterphasen mit jeweils zwei Umrichterarmen. Jede Umrichterphase erstreckt sich zwischen einem positiven und einem negativen Gleichspannungspol der Umrichteranordnung, die zugleich mit der ersten beziehungsweise positiven und der zweiten beziehungsweise negativen Gleichspannungssammelschiene verbunden sind. Die Umrichterarme einer einzelnen Umrichterphase sind in Reihe miteinander verbunden, wobei zwischen den Umrichterarmen jeweils ein Wechselspannungsanschluss zum Verbinden des Umrichters mit einer zugeordneten Phase des Wechselspannungsnetzes angeordnet ist. Die Speicheranordnung ist parallel zu den Umrichterphasen zwischen dem positiven und dem negativen Gleichspannungspol geschaltet.

Die Erfindung soll im Folgenden anhand der in den Figuren 1 bis 4 dargestellten Ausführungsbeispiele weiter erläutert werden.
Figur 1 zeigt ein Ausführungsbeispiel einer erfindungsgemäßen Umrichteranordnung in einer schematischen Darstellung;
Figur 2 zeigt ein erstes Ausführungsbeispiel einer Speicheranordnung;
Figur 3 zeigt ein zweites Ausführungsbeispiel einer Speicheranordnung;
Figur 4 zeigt ein Beispiel eines Halbleiterschaltmoduls.

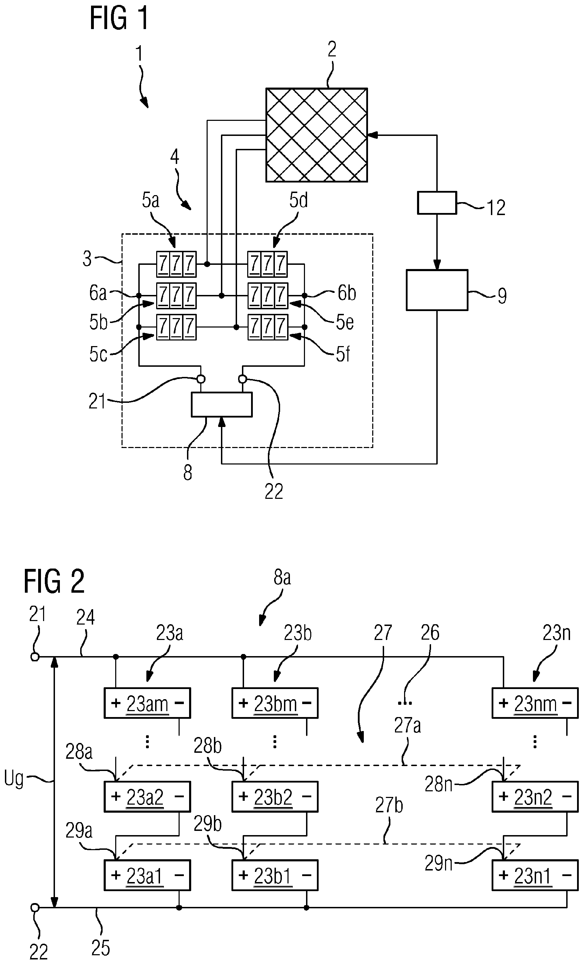

Im Einzelnen ist in Figur 1 eine Umrichteranordnung 1 zum Stabilisieren eines Wechselspannungsnetzes 2 dargestellt. Die Umrichteranordnung 1 umfasst einen Umrichter 3, der einen Wechselspannungsanschluss 4 zum Anschluss an das Wechselspannungsnetz 2 aufweist. Damit ist der Umrichter 3 wechselspannungsseitig mit dem Wechselspannungsnetz 2 verbindbar. Der Umrichter umfasst sechs Umrichterarme 5a-5f, die in einer Doppelsternschaltung miteinander verbunden sind. Die drei Umrichterarme 5a-c sind in einem ersten Sternpunkt 6a, die Umrichterarme 5d-f in einem zweiten Sternpunkt 6b miteinander verbunden.

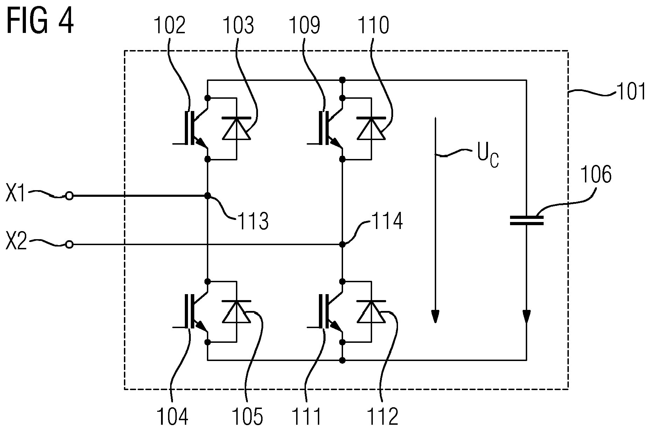

Jeder Umrichterarm 5a-f weist eine Reihenschaltung von (im Ausführungsbeispiel der Figur 1 gleichartig aufgebauten) Halbleiterschaltmodulen 7. Auf den Aufbau der Halbleiterschaltmodule 7 wird in der nachfolgenden Figur 4 näher eingegangen. Aus Gründen der Übersichtlichkeit sind in Figur 1 lediglich drei Halbleiterschaltmodule 7 dargestellt, deren Anzahl aber grundsätzlich beliebig und an die jeweilige Anwendung angepasst sein kann.

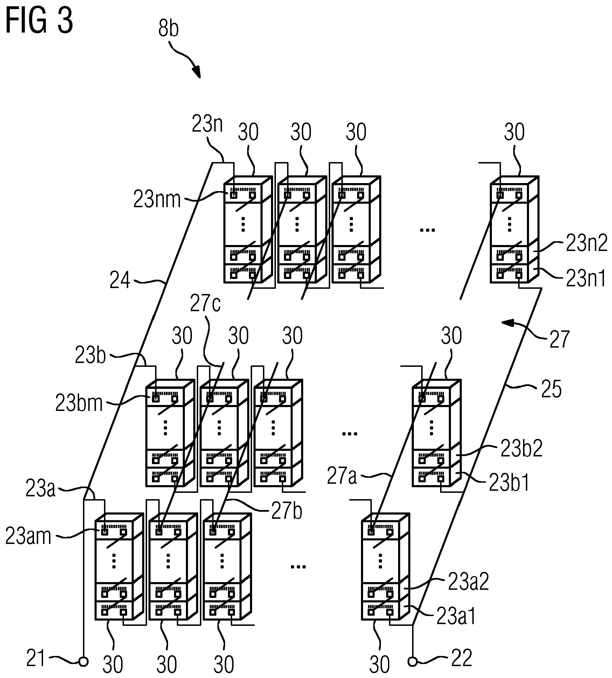

Die Umrichteranordnung 1 umfasst ferner eine Speicheranordnung 8, die parallel zu den drei Umrichterphasen des Umrichters 3 angeordnet ist. Die Speicheranordnung 8 umfasst eine Mehrzahl von Energiespeichermodulen. Auf den Aufbau der Speicheranordnung 8 wird in den nachfolgenden Figuren 2 und 3 näher eingegangen.

Eine Regelungseinrichtung 9 zur Regelung der Umrichteranordnung 1 erlaubt eine derartige Steuerung der Halbleiterschaltmodule 7, dass ein Austausch von Blind- und Wirkleistung mit dem Wechselspannungsnetz 2 ermöglicht ist.

Die Spannung im Wechselspannungsnetz 2 beträgt 110 kV AC. Eine Messeinrichtung 12 ist dazu eingerichtet, die Leistung im Wechselspannungsnetz 2 zu messen. Die Messeinrichtung 12 ist ausgangsseitig mit der Regelungseinrichtung 9 verbunden, so dass die Regelung der Umrichteranordnung 1 unter Verwendung der gemessenen übertragenen Leistung vorgenommen wird. Die Messung der Leistung kann beispielsweise über eine Strom- und Spannungsmessung erfolgen.

Figur 2 zeigt eine Speicheranordnung 8a, die als Speicheranordnung 8 in der Umrichteranordnung 1 der Figur 1 einsetzbar ist. Die Speicheranordnung 8a weist zwei Anschlüsse 21, 22 auf. Mittels der Anschlüsse 21, 22 kann die Speicheranordnung 8a mit der Gleichspannungsseite des Umrichters 3 der Umrichteranordnung 1 der Figur 1 verbunden werden. Die Speicheranordnung 8a umfasst eine Vielzahl von Speicherzweigen 23a-n, die sich jeweils zwischen einer positiven Gleichspannungssammelschiene 24 und einer negativen Gleichspannungssammelschiene 25 erstrecken und mit ihr elektrisch verbunden sind. In Figur 2 sind aus Übersichtlichkeitsgründen lediglich drei Speicherzweige 23a,b,n figürlich dargestellt. Ihre Anzahl ist jedoch grundsätzlich im Rahmen der jeweiligen Anwendung beliebig, was durch die punktierte Linie 26 angedeutet ist.

Jeder Speicherzweig 23a-n weist eine Reihenschaltung von m einzelnen Energiespeichermodulen 23a1-m, 23b1-m, 23n1-m auf. Die Speicherzweige 23a-n sind zueinander parallel geschaltet. Die Anzahl m der Energiespeichermodule 23a1-23nm in jedem Zweig kann bis zu mehreren hundert betragen. In dem Beispiel der Figur 2 weist jedes der Energiespeichermodule eine Spannung von 100 V auf. Die an den Anschlüssen 21, 22 der Speicheranordnung 8a abfallende Gesamtspannung Ug beträgt 15 kV.

Zur Balancierung der an den Energiespeichermodulen abfallenden Energiespeichermodulspannungen ist eine rein passive Balancierungsvorrichtung vorgesehen. Die Balancierungsvorrichtung umfasst Balancierungsleitungen 27a, 27b. Die Balancierungsvorrichtung umfasst darüber hinaus keine aktiven Bauteile im Sinne einer Regelung oder Datenverarbeitung, so dass die Balancierungsvorrichtung rein passiv ist. Die Balancierungsleitung 27a verbindet positive Anschlussklemmen 28a-n der Energiespeichermodule 23a2-n2 elektrisch miteinander, so dass Ausgleichströme aufgrund unterschiedlicher Spannungsniveaus an den Energiespeichermodulen 23a2-n2 über die Balancierungsleitung 27a fließen können und für eine Beseitigung der Unsymmetrie sorgen. Es ist zu erkennen, dass die Balancierungsleitung 27a Energiespeichermodule 23a2-n2 mit einer gleichen Ordnungszahl, in diesem Fall der Ordnungszahl zwei, miteinander verbindet. Entsprechend verbindet die Balancierungsleitung 27b positive Anschlussklemmen 29a-n der Energiespeichermodule 23a1-n1 elektrisch miteinander, so dass Ausgleichströme aufgrund unterschiedlicher Spannungsniveaus an den Energiespeichermodulen 23a1-n1 über die Balancierungsleitung 27b fließen können und für eine Beseitigung der Unsymmetrie sorgen. Es ist zu erkennen, dass die Balancierungsleitung 27b Energiespeichermodule 23a1-n1 mit einer gleichen Ordnungszahl, in diesem Fall der Ordnungszahl eins, verbindet.

Weitere, in Figur 2 grafisch nicht dargestellte Balancierungsleitungen können weitere Energiespeichermodule miteinander verbinden.

Figur 3 zeigt eine Speicheranordnung 8b, die als Speicheranordnung 8 der Umrichteranordnung 1 der Figur 1 einsetzbar ist. Im Prinzip ähnelt der Aufbau der Speicheranordnung 8b demjenigen der Speicheranordnung 8a. Aus Gründen der Übersichtlichkeit sind in den Figuren 2 und 3 gleiche und gleichartige Elemente mit gleichen Bezugszeichen versehen.

Im Unterschied zur Speicheranordnung 8a der Figur 2 sind die Energiespeichermodule 23a1-nm der Speicheranordnung 8b in Türmen 30 angeordnet. Jeder Turm 30 kann dabei 5 bis 50 Energiespeichermodule 23a1-nm aufnehmen. Die Speicheranordnung 8b umfasst 100 bis 200 Türme 30.

Die Energiespeichermodule 23a1-nm umfassen jeweils sogenannte Superkondensatoren. Die an den Energiespeichermodulen 23a1-nm abfallende Spannung beträgt im Beispiel der Figur 3 125 V. Entsprechend kann die Spannung an jedem Turm beispielsweise 1,25 kV und die Gesamtspannung an den Anschlüssen 21, 22 der Speicheranordnung kann 24 kV betragen, falls zehn Energiespeichermodule pro Turm 30 und zwanzig Türme in einem Speicherzweig 23a-n eingesetzt sind.

Balancierungsleitungen 27a-c verbinden elektrisch positive Anschlussklemmen der Türme 30 mit gleicher Ordnungszahl miteinander, so dass eine passive Balancierung der Energiespeicherspannungen wie zuvor beschrieben ermöglicht ist.

Ein Beispiel eines Halbleiterschaltmoduls 7 in Form einer Vollbrückenmodulschaltung 101 ist in Figur 4 schematisch dargestellt. Die Vollbrückenmodulschaltung 101 weist einen ersten Halbleiterschalter 102 in Form eines IGBT, dem eine Freilaufdiode 103 antiparallel geschaltet ist sowie einen zweiten Halbleiterschalter 104 in Form eines IGBT, dem eine Freilaufdiode 105 antiparallel geschaltet ist. Die Durchlassrichtung der beiden Halbleiterschalter 102 und 104 ist gleichgerichtet. Ferner umfasst die Vollbrückenmodulschaltung 101 einen dritten Halbleiterschalter 109 in Form eines IGBT, dem eine Freilaufdiode 110 antiparallel geschaltet ist sowie einen vierten Halbleiterschalter 111 in Form eines IGBT, dem eine Freilaufdiode 112 antiparallel geschaltet ist. Die Durchlassrichtung der beiden Halbleiterschalter 109 und 111 ist gleichgerichtet. Die Halbleiterschalter 102 und 104 mit ihnen zugeordneten Freilaufdioden 103, 105 bilden somit eine Reihenschaltung, die einer durch die Halbleiterschalter 109, 111 und die zugeordneten Freilaufdioden 110 und 112 gebildeten Reihenschaltung parallel geschaltet ist. Ein Zwischenkondensator 106 ist parallel zu den beiden Reihenschaltungen angeordnet. Der erste Anschluss X1 ist an einem Potenzialpunkt 113 zwischen den Halbleiterschaltern 102, 104 angeordnet, der zweite Anschluss X2 ist an einem Potenzialpunkt 114 zwischen den Halbleiterschaltern 109, 111 angeordnet.

Durch eine geeignete Steuerung der Leistungshalbleiter 102, 104, 109 und 111 kann die an den Anschlüssen X1, X2 abfallende Spannung erzeugt werden, die der am Zwischenkondensator 106 abfallenden Spannung Uc, der am Zwischenkondensator 106 abfallenden Spannung jedoch mit entgegengesetzter Polarität (-Uc) oder der Spannung null entspricht.

## Patentansprüche

1. Umrichteranordnung (1) mit einem Umrichter (3), der wechselspannungsseitig mit einem Wechselspannungsnetz (2) verbindbar ist, und einer Speicheranordnung (8), mit der der Umrichter gleichspannungsseitig verbindbar ist,
**dadurch gekennzeichnet, dass**
- der Umrichter (3) eine Mehrzahl von Umrichterarmen (5a-f) aufweist, die jeweils eine Reihenschaltung von Halbleiterschaltmodulen (7) aufweisen, und
- die Speicheranordnung (8) in Parallelschaltung zu wenigstens einem der Umrichterarme (5a-f) angeordnet ist, wobei die Speicheranordnung (8) eine Vielzahl von Speicherzweigen (23a-n) aufweist, die jeweils eine Reihenschaltung einzelner Energiespeichermodule (23a1-nm) umfassen, wobei jeder Speicherzweig (23a-n) sich zwischen einer ersten und einer zweiten Gleichspannungssammelschiene (24, 25) erstreckt, so dass die Speicherzweige (23a-n) zueinander parallel geschaltet sind, wobei
- die Umrichteranordnung (1) ferner eine Balancierungsvorrichtung (27) zum Balancieren von Energiespeichermodulspannungen der Energiespeichermodule (23a1-nm) umfasst, wobei die Balancierungsvorrichtung (27) Balancierungsleitungen (27a, b) umfasst, die einzelne Energiespeichermodule (23a1-nm) unterschiedlicher Speicherzweige (23a-n) miteinander verbinden.

2. Umrichteranordnung (1) nach Anspruch 1, wobei die Balancierungsvorrichtung (27) rein passiv ist.

3. Umrichteranordnung (1) nach einem der vorangehenden Ansprüche, wobei die Balancierungsleitungen (27a, b) auf Ausgleichsströme ausgelegt sind, die im Betrieb der Umrichteranordnung (1) aufgrund von Kapazitätsdifferenzen zwischen den Energiespeichermodulen (23a1-nm) unterschiedlicher Speicherzweige (23a-n) fließen können.

4. Umrichteranordnung (1) nach einem der vorangehenden Ansprüche, wobei jedem der Energiespeichermodule (23a1-nm) eine Ordnungszahl bezogen auf die übrigen Energiespeichermodule (23a1-nm) der gleichen Reihenschaltung zuweisbar ist, und die Balancierungsleitungen (27a, b) jeweils Energiespeichermodule (23a1-nm) gleicher Ordnungszahl miteinander verbinden.

5. Umrichteranordnung (1) nach einem der vorangehenden Ansprüche, wobei jeder Speicherzweig (23a-n) die gleiche Anzahl an Energiespeichermodulen (23a1-nm) aufweist und die Anzahl der Balancierungsleitungen (27a, b) der Anzahl der Energiespeichermodule (23a1-nm) in jedem Speicherzweig (23a-n) entspricht.

6. Umrichteranordnung (1) nach einem der vorangehenden Ansprüche, wobei die einzelnen Energiespeichermodule (23a1-nm) Supercaps und/oder Batteriespeicher umfassen.

7. Umrichteranordnung (1) nach einem der vorangehenden Ansprüche, wobei an den einzelnen Energiespeichermodulen (23a1-nm) eine Spannung von mehr als 1 kV erzeugt werden kann.

8. Umrichteranordnung (1) nach einem der vorangehenden Ansprüche, wobei die Energiespeichermodule (23a1-nm) jeweils eine positive und eine negative Anschlussklemme aufweisen, wobei jede der Balancierungsleitungen (27a, b) die positiven oder die negativen Anschlussklemmen der Energiespeichermodule verbindet.

9. Umrichteranordnung (1) nach einem der vorangehenden Ansprüche, wobei die Halbleiterschaltmodule (7) Zwischenkondensatoren (106) umfassen.

10. Umrichteranordnung (1) nach einem der vorangehenden Ansprüche, wobei die Halbleiterschaltmodule (7) jeweils Halbleiterschalter (102, 104, 109, 111) sowie einen Zwischenkondensator (106) umfassen, die miteinander in einer Vollbrückenmodulschaltung verbunden sind.

11. Umrichteranordnung (1) nach einem der vorangehenden Ansprüche, wobei die Umrichteranordnung (1) dazu eingerichtet ist, durch geeignete Ansteuerung der Halbleiterschaltmodule (7) mittels einer Regelungseinrichtung (9) eine Wirkleistung zwischen der Speicheranordnung (8) und einem an die Umrichteranordnung wechselspannungsseitig angeschlossenen Wechselspannungsnetz (1) auszutauschen.

12. Umrichteranordnung (1) nach einem der vorangehenden Ansprüche, wobei die Umrichteranordnung (1) dazu eingerichtet ist, durch geeignete Ansteuerung der Halbleiterschaltmodule (7) mittels einer Regelungseinrichtung (9) eine Blindleistung zwischen den Halbleiterschaltmodulen (7) und einem an die Umrichteranordnung (1) wechselspannungsseitig angeschlossenen Wechselspannungsnetz (2) auszutauschen.

13. Umrichteranordnung (1) nach einem der vorangehenden Ansprüche, wobei die Umrichterarme (5a-f) des Umrichters (3) in einer Doppelsternanordnung miteinander verbunden sind.
